# EUROPÄISCHE PATENTANMELDUNG

(11) **EP 2 479 719 A2**
(43) Veröffentlichungstag der Anmeldung: **25.07.2012**
(21) Anmeldenummer: 12150218.1
(22) Anmeldetag: 05.01.2012
(51) Int. Cl.: G06Q 10/08, B65G 1/137, H01Q 1/12, G06K 7/00

(54) **System und Verfahren zur Lagerung und Überwachung von Gütern mittels RFID-Technologie**

(30) Priorität: 24.01.2011 DE 102011003027
(71) Anmelder: Deutsche Post AG, 53113 Bonn (DE)
(72) Erfinder: Zehnpfennig, Michael, 53859 Niederkassel (DE)
(74) Vertreter: Jostarndt, Hans-Dieter

(57) **Zusammenfassung**

Die Erfindung betrifft ein System zur Lagerung und Überwachung von Gütern, umfassend wenigstens eine Lagerebene, auf der die Güter an definierten Positionen platzierbar sind, so dass jedes Gut einer definierten Position zugeordnet ist. Jedes Gut ist dabei jeweils mit wenigstens einem passiven RFID-Transponder versehen, und das System umfasst mehrere Lesegeräte zur Erfassung dieser RFID-Transponder an den Gütern. Die Lesegeräte stehen in Verbindung mit einer Datenverarbeitungseinheit, welche Mittel zur Auswertung erfasster RFID-Signale der RFID-Transponder aufweist, und jeder Lagerebene des Systems sind wenigstens zwei Lesegeräte zugeordnet, die Transponder auf der betreffenden Lagerebene erfassen können. Das System zeichnet sich dadurch aus, dass die definierten Positionen für Güter nebeneinander in einer Reihe auf einer Lagerebene angeordnet sind und wenigstens ein Lesegerät entlang dieser Reihe von definierten Positionen verschiebbar und/oder in Bezug zu dieser schwenkbar ausgeführt ist. Ferner beinhalten die Güter wenigstens ein Material, das gegenüber elektromagnetischen Feldern eine Abschirmwirkung aufweist und an wenigstens einer definierten Position auf einer Lagerebene ist ein Lokalisationstransponder so angeordnet, dass der Lokalisationstransponder bei Positionierung eines Gutes im Bereich dieses Lokalisationstransponders aufgrund der Abschirmwirkung des betreffenden Gutes durch kein Lesegerät erfassbar ist.

## Beschreibung

Die Erfindung betrifft ein System zur Lagerung und Überwachung von Gütern, umfassend wenigstens eine Lagerebene, auf der die Güter an definierten Positionen platzierbar sind, so dass jedes Gut einer definierten Position zugeordnet ist. Jedes Gut ist dabei jeweils mit wenigstens einem passiven RFI D-Transponder versehen und das System umfasst wenigstens ein Lesegerät zur Erfassung dieser RFID-Transponder an den Gütern. Das wenigstens eine Lesegerät steht in Verbindung mit einer Datenverarbeitungseinheit, welche Mittel zur Auswertung erfasster RFID-Signale der RFID-Transponder aufweist, und jeder Lagerebene des Systems sind wenigstens zwei Lesegeräte zugeordnet, die RFID-Transponder auf der betreffenden Lagerebene erfassen können.

Die Erfindung betrifft ferner ein Verfahren zur Überwachung von Gütern in einem solchen System, bei dem die Auswertung der RFID-Signale durch die Datenverarbeitungseinheit eine Zuordnung von RFID-Transpondern und den ihnen zugeordneten Gütern zu einer Position auf einer Lagerebene beinhaltet.

Im Bereich der Logistik wird verstärkt dazu übergegangen, zur Überwachung des Bestands eines Lagers und der Güterbewegungen innerhalb eines Lagers RFID-Technologie einzusetzen. Diese Technologie hat den Vorteil, dass Positionen und Bewegungen von Gütern berührungslos überwacht werden können. Dabei werden beispielsweise einzelne Güter, Behälter und/oder Paletten mit RFID-Transpondern versehen und im Lager wird eine Infrastruktur aus Lesegeräten installiert. Will man nur den Güterzufluss und Güterabfluss aus einem Lager überwachen, können RFID-Schleusen an den Ein- und Ausgängen des Lagers ausreichen, wodurch registriert werden kann, wenn Güter diese Schleusen passieren. Will man jedoch auch die Position von Gütern innerhalb eines Lagers bestimmen können, müssen innerhalb des Lagers weitere Lesegeräte vorhanden sein. Bei Regallagern bzw. Hochregallagern ist es dabei erforderlich, Regaleinheiten mit der notwendigen Anzahl von RFID-Lesegeräten auszustatten, um alle Regalböden vollständig ausleuchten zu können, d.h. RFID-Transponder auf allen Regalböden erfassen zu können.

Um eine sichere Erfassung von RFID-Transpondern auf Regalböden eines Regallagers zu gewährleisten, müssen jedoch bei der Ausstattung eines Regallagers bestimmte Umgebungsbedingungen, wie leitende Materialen des Regallagers, Abschirmungen, Abstände zwischen Regalbauteilen und Gütern, Überschneidungen von Wechselfeldern der Lesegeräte, etc., beachtet werden, woraus sich üblicherweise die Anzahl der erforderlichen Lesegeräte, deren Anordnung im Regallager sowie die zu verwendenden Frequenzen ergeben, die außerdem innerhalb erlaubter Frequenzbänder liegen müssen.

Beispielsweise offenbart die deutsche Gebrauchsmusterschrift DE 20 2007 009 056 U1 ein Materiallager, dessen Inhalt mittels RFID-Technologie überwacht wird, wobei leitende Teile des Regals nicht die Sende- und Empfangseigenschaften einer Ringantenne beeinflussen sollen. Aus der internationalen Patentanmeldung WO 2008/027650 A2 sind ferner RFID-Systeme bekannt, die vorteilhaft für ein solches Lager verwendet werden können, in dem eine Vielzahl von RFID-Transpondern durch mehrere Lesegeräte erfasst werden muss.

Insbesondere bei der Bestimmung der Position von Gütern auf definierten Stellplätzen eines Regallagers ist oftmals das Problem zu lösen, dass RFID-Transponder dieser Güter aufgrund der Überschneidung von Wechselfeldern der Lesegeräte nicht nur von einem Lesegerät, sondern gleichzeitig von mehreren Lesegeräten gelesen werden können. Dies kann eine exakte Bestimmung der Position des betreffenden Guts erschweren, wenn jeder definierten Position auf einer Lagerebene ein Lesegerät zugeordnet ist. Verkleinert man den Abstrahlwinkel der Wechselfelder, um derartige Überschneidungen zu vermeiden, bedingt diese Vorgehensweise eine hohe Anzahl von Lesegeräten. Allerdings sind insbesondere die Lesegeräte eines RFID-Systems kostenintensiv in der Anschaffung und im Betrieb, so dass sich diese Vorgehensweise bei großen Lagern nachteilig auswirkt.

Wenn in einem Regalsystem Güter verschiedener Größe ein- und ausgelagert werden, erfordert dies ebenfalls eine Vielzahl von Lesegeräten, um eine vollständige Erfassung dieser Güter zu gewährleisten, da die Position der Güter auf den verfügbaren Stellplätzen und damit der Abstand der zugehörigen RFID-Transponder zu den am Regalsystem angebrachten Lesegeräten variieren kann. Dies ist insbesondere bei der Verwendung von Industriepaletten und Europaletten der Fall, die unterschiedliche Abmessungen aufweisen, so dass auf einem Regalboden üblicherweise mehr Europaletten nebeneinander gelagert werden können als Industriepaletten. Sollen beide Varianten überwachbar sein, muss üblicherweise eine Vielzahl von Lesegeräten am jeweiligen Regalboden angebracht werden, um Transponder an den verschiedenen möglichen Positionen auf einem Regalboden erfassen und auch lokalisieren zu können. Dies führt zu hohen Kosten und erhöht das Problem der sich überschneidenden Wechselfelder von Lesegeräten, was wiederum die Bestimmung der genauen Position von Gütern in einem Lager erschwert.

Aufgabe der Erfindung ist es daher, ein System zur sicheren Überwachung und Lokalisierung von Gütern in einem Lager bereitzustellen, das eine möglichst geringe Anzahl von Lesegeräten erfordert.

Ferner ist es Aufgabe der Erfindung, ein Verfahren zur sicheren Überwachung von Gütern in einem solchen System bereitzustellen, mit dem sich der Stellplatz eines Gutes auf einer Lagerebene ermitteln lässt.

Erfindungsgemäß wird diese Aufgabe durch ein System mit den Merkmalen des unabhängigen Anspruches 1 gelöst. Vorteilhafte Weiterbildungen des Systems ergeben sich aus den Unteransprüchen 2-7. Die Aufgabe wird ferner durch ein Verfahren nach Anspruch 8 gelöst. Vorteilhafte Ausführungsformen des Verfahrens ergeben sich aus den Unteransprüchen 9-13.

Die Erfindung umfasst ein System zur Lagerung und Überwachung von Gütern, umfassend wenigstens eine Lagerebene, auf der die Güter an definierten Positionen platzierbar sind, so dass jedes Gut einer definierten Position zugeordnet ist. Dabei sind die Güter jeweils mit wenigstens einem passiven RFID-Transponder versehen, und das System umfasst wenigstens ein Lesegerät zur Erfassung dieser RFID-Transponder. Das wenigstens eine Lesegerät steht in Verbindung mit einer Datenverarbeitungseinheit, welche Mittel zur Auswertung erfasster RFID-Signale der RFID-Transponder aufweist, und jeder Lagerebene sind wenigstens zwei Lesegeräte zugeordnet.

Ein Lesegerät im Sinne dieser Erfindung ist dadurch gekennzeichnet, dass es mindestens eine Antenne an ein RFID-Lesegerät koppelt und dadurch in der Lage ist, mit einem passiven RFID-Transponder gemäß den jeweils gültigen lokalen Funk-Regularien zu kommunizieren. Sind mehrere Antennen an das RFID-Lesegerät angeschlossen, so bezeichnet der Begriff Lesegerät im Sinne dieser Erfindung jeweils eine Antenne, da deren Position, Winkel und technische Eigenschaften die Erfassung eines RFID-Transponders maßgeblich beeinflussen.

Als Güter im Sinne dieser Erfindung werden sowohl Waren, Produkte, Rohstoffe, Behälter, Transportpaletten, etc. angesehen.

Erfindungsgemäß sind die definierten Positionen für Güter nebeneinander in einer Reihe auf einer Lagerebene angeordnet, und wenigstens ein Lesegerät ist entlang dieser Reihe von definierten Positionen verschiebbar und/oder in Bezug zu dieser schwenkbar ausgeführt. Durch die Verschiebbarkeit und/oder Schwenkbarkeit der Lesegeräte kann die Lage der Lesegeräte so verändert werden, dass die gleichen Lesegeräte für eine geringere oder höhere Anzahl von möglichen Positionen auf einer Lagerebene eingesetzt werden können. Die Lage der Lesegeräte kann dadurch so variiert werden, dass sie mit der erforderlichen Genauigkeit an verschiedene Situationen auf einer Lagerebene angepasst werden können. Dies kann beispielsweise durch eine Verschiebbarkeit wenigstens eines Lesegerätes erreicht werden, durch welche sich der Abstand zwischen Lesegeräten und der Abstand von Lesegeräten zu Positionen auf einer Lagerebene verändern lässt. Durch eine Schwenkbarkeit von Lesegeräten kann die Richtung des ausgestrahlten Wechselfeldes eines Lesegerätes verändert werden, was ebenfalls für die Anpassung der Lesegeräte an eine andere Stellplatzsituation auf einer Lagerebene eingesetzt werden kann. Beide Varianten können auch kombiniert verwendet werden.

Schwenkbarkeit im Sinne dieser Erfindung ist dadurch gekennzeichnet, dass einerseits die Lesegeräte so beweglich gelagert sind, dass manuell oder automatisch ein beliebiger Schwenkwinkel frei einstellbar ist. Andererseits kann Schwenkbarkeit im Sinne dieser Erfindung auch bedeuten, dass ein fest installiertes Lesegerät zum Schwenken erst demontiert und dann wieder montiert werden muss, wobei beispielsweise durch die Befestigung vorgegebene Schwenkwinkel eingestellt werden können.

Ferner beinhalten die Güter erfindungsgemäß wenigstens ein Material, das gegenüber elektromagnetischen Feldern eine Abschirmwirkung aufweist und an wenigstens einer definierten Position auf einer Lagerebene ist ein Lokalisationstransponder so angeordnet, dass der Lokalisationstransponder bei Positionierung eines Gutes im Bereich dieses Lokalisationstransponders aufgrund der Abschirmwirkung des betreffenden Gutes durch kein Lesegerät erfassbar ist. Bedingt durch das verwendete Material wird der Lokalisationstransponder entsprechend vor dem abgestrahlten Wechselfeld des Lesegerätes abgeschirmt. Dadurch kann der Lokalisationstransponder von dem Lesegerät dann nicht mehr erfasst werden, wenn ein Gut im Bereich dieses Lokalisationstransponders positioniert ist. Vielmehr kann der Lokalisationstransponder von dem Lesegerät nur erfasst werden, wenn sich kein Gut im Bereich des Lokalisationstransponders befindet. Damit lässt sich erkennen, ob auf der definierten Position ein Gut abgestellt ist oder ob diese Position nicht von einem Gut belegt ist. Dies wiederum führt zu einer wesentlichen Verbesserung bei der Überwachung von Gütern, da die Belegung einer definierten Position auf einer Lagerebene einfach über die Erfassung des Lokalisationstransponders in diesem Bereich darstellbar ist.

Erfindungsgemäß ist wenigstens ein Lesegerät durch Verschieben und/oder Verschwenken aus einer ersten Lage in eine zweite Lage bewegbar, wobei in der ersten Lage bei Belegung aller Positionen der zugeordneten Lagerebene mit Gütern kein RFID-Transponder gleichzeitig von zwei benachbarten Lesegeräten erfassbar ist, während in der zweiten Lage bei Belegung aller Positionen dieser Lagerebene mit Gütern wenigstens ein RFID-Transponder gleichzeitig von zwei benachbarten Lesegeräten erfassbar ist. Die erste Lage bezeichnet dabei eine Lage der Lesegeräte, die noch für eine andere Situation auf der Lagerebene eingestellt ist, was für eine neue Situation auf der Lagerebene dazu führt, dass bei Belegung aller Positionen der zugeordneten Lagerebene mit Gütern kein RFID-Transponder gleichzeitig von zwei benachbarten Lesegeräten erfassbar ist. Dies ist jedoch nachteilig, da es für die Erfindung erforderlich ist, dass bei Belegung aller Positionen dieser Lagerebene mit Gütern wenigstens ein RFID-Transponder gleichzeitig von zwei benachbarten Lesegeräten erfassbar ist. Daher wird wenigstens ein Lesegerät durch Verschieben und/oder Verschwenken in eine zweite Lage bewegt, die an die neue Situation auf der Lagerebene angepasst ist und dadurch gekennzeichnet ist, dass bei Belegung aller Positionen dieser Lagerebene mit Gütern eben wenigstens ein RFID-Transponder gleichzeitig von zwei benachbarten Lesegeräten erfassbar ist.

Vorzugsweise ist der wenigstens eine Lokalisationstransponder im Bereich einer Position auf der Lagerebene angeordnet, auf der bei voller Belegung aller definierten Positionen der Lagerebene das Gut mit dem RFID-Transponder angeordnet ist, der in der zweiten Lage der Lesegeräte gleichzeitig von zwei benachbarten Lesegeräten erfassbar ist. Durch die gleichzeitige Erfassung des RFID-Transponders eines Gutes von zwei benachbarten Lesegeräten ist die Position des auf der Lagerebene abgestellten Gutes genau bestimmbar. Wenn das Gut von dieser Position entfernt wird, wird auch der dort befindliche Lokalisationstransponder nicht mehr abgeschirmt und kann von wenigstens einem der Lesegeräte erfasst werden. Dadurch wird signalisiert, dass diese Position der Lagerebene nicht mehr belegt ist. Dies ermöglicht eine verbesserte Überwachung, da dadurch positionsgenau abgebildet wird, welche Güter sich wo auf der Lagerebene befinden und wo es nicht belegte Positionen auf der Lagerebene gibt. Zudem wird die über die Erfassung des Transponders des Gutes ermittelte Position des Gutes entsprechend bestätigt.

Es gestaltet sich vorteilhaft, wenn Lokalisationstransponder im Bereich aller Positionen auf der Lagerebene angeordnet sind, auf denen bei voller Belegung aller definierten Positionen der Lagerebene Güter mit RFID-Transpondern angeordnet sind. Mit einer Anordnung von Lokalisationstranspondern im Bereich aller definierten Positionen der Lagerebene kann eine weitere Erhöhung der Genauigkeit bei der Unterscheidung freier und belegter Positionen einer Lagerebene erreicht werden, da jeder Position ein eigener Lokalisationstransponder zugeordnet ist, der diese Position genau spezifiziert. Sobald ein Lokalisationstransponder lesbar wird, kann daraus abgeleitet werden, dass sich an dieser Position kein Gut mehr befindet und sobald ein Lokalisationstransponder nicht mehr lesbar ist, wurde diese Position entsprechend wieder mit einem Gut belegt.

Die Anzahl der Lokalisationstransponder für eine Lagerebene kann höher sein als die maximale Anzahl definierter Positionen für eine volle Belegung der Lagerebene mit Gütern. Dies hat den Vorteil, dass für jegliche mögliche Stellplätze von Gütern auf der Lagerebene Lokalisationstransponder vorhanden sind. So ist immer genau feststellbar, welche definierten Positionen einer Lagerebene wie belegt sind, auch wenn sich die Anzahl definierter Positionen in Abhängigkeit von der Größe der zu lagernden Güter entsprechend ändern kann. Dadurch ist es nicht mehr erforderlich, Anpassungen der Anzahl und der Anordnung der Lokalisationstransponder an eine geänderte Anzahl definierter Positionen vorzunehmen. Es kann jedoch auch vorgesehen sein, dass Lokalisationstransponder verschiebbar ausgeführt sind, so dass sich ihre Position auf der Lagerebene verändern lässt, um für jede Anzahl und Anordnung von Stallplatzpositionen auf der Lagerebene in der Lage zu sein, Lokalisationstransponder zu den jeweils vorgesehenen Positionen zu schieben.

Vorzugsweise verläuft eine Lagerebene horizontal und die wenigstens zwei Lesegeräte sind oberhalb der Lagerebene und der Güter angeordnet, wobei die RFID-Transponder jeweils im oberen Bereich der Güter angebracht sind. Dabei können die wenigstens zwei Lesegeräte an einer Halterung angeordnet sein, die parallel zur Lagerebene verläuft, wobei die Halterung eine Schiene umfasst, innerhalb der das wenigstens eine Lesegerät verschiebbar angebracht ist. Der wenigstens eine Lokalisationstransponder ist dann vorzugsweise unterhalb der Güter angeordnet, damit eine entsprechende Abschirmung gewährleistet ist.

Die Erfindung umfasst ferner ein Verfahren zur Überwachung von Gütern in einem solchen System, bei dem Signale der Lesegeräte zur Auswertung an eine Datenverarbeitungseinheit übermittelt werden, wobei die Auswertung eine Zuordnung von RFID-Transpondern und den ihnen zugeordneten Gütern zu einer Position auf einer Lagerebene beinhaltet.

Erfindungsgemäß wird wenigstens ein Lesegerät durch Verschieben und/oder Verschwenken aus einer ersten Lage in eine zweite Lage bewegt, wobei in der ersten Lage bei Belegung aller Positionen der zugeordneten Lagerebene mit Gütern kein RFID-Transponder gleichzeitig von zwei benachbarten Lesegeräten erfassbar ist, während in der zweiten Lage bei Belegung aller Positionen dieser Lagerebene mit Gütern wenigstens ein RFID-Transponder gleichzeitig von zwei benachbarten Lesegeräten erfassbar ist. Die Auswertung der RFID-Signale durch die Datenverarbeitungseinheit in der zweiten Lage der Lesegeräte beinhaltet, dass ein Gut mit einem RFID-Transponder, der gleichzeitig von zwei Lesegeräten erfassbar ist, einer Position auf der Lagerebene zugeordnet wird, deren zugeordneter Lokalisationstransponder zu einem ersten Zeitpunkt vor der Erfassung dieses RFID-Transponders erfasst wurde und zu einem darauffolgenden Zeitpunkt nach der Erfassung dieses RFID-Transponders nicht mehr durch ein Lesegerät erfasst wurde.

Diese Vorgehensweise hat zum einen den Vorteil, dass die Lesegeräte durch Verschieben und/oder Verschwenken aus einer für die Lokalisierung von RFID-Transpondern nachteiligen Lage in eine Lage gebracht werden, in der eine Lokalisierung möglich ist, wobei diese zweite Lage dadurch gekennzeichnet ist, dass bei Belegung aller Positionen dieser Lagerebene mit Gütern wenigstens ein RFID-Transponder gleichzeitig von zwei benachbarten Lesegeräten erfassbar ist. Zum anderen gestaltet sich vorteilhaft, dass ein Lokalisationstransponder nicht mehr erfassbar ist, wenn er durch ein Gut abgeschirmt ist und dass dadurch die Zuordnung einer Position auf der Lagerebene vereinfacht und die Genauigkeit der Positionsbestimmung für das Gut maßgeblich erhöht wird.

Die Lesegeräte können dabei in einem ersten Überwachungszeitraum in der ersten Lage angeordnet werden, wobei Güter einer Lagerebene an einer bestimmten Anzahl von definierten Positionen auf dieser Lagerebene platzierbar sind, während die Lesegeräte in einem zweiten Überwachungszeitraum in der zweiten Lage angeordnet werden, und in dem zweiten Überwachungszeitraum Güter an einer anderen Anzahl an definierten Positionen auf der gleichen Lagerebene platzierbar sind als im ersten Überwachungszeitraum. Die Situationen auf einer Lagerebene, an welche die Lage der Lesegeräte angepasst werden muss, unterscheiden sich somit durch die Anzahl von definierten Positionen für Güter auf einer Lagerebene. Ändert sich die Anzahl der definierten Positionen auf einer Lagerebene, werden die Lesegeräte entsprechend verschoben bzw. geschwenkt, um auch für eine geänderte Anzahl von Positionen und damit Gütern eine zuverlässige Lokalisierung zu ermöglichen.

Dabei wird die Anzahl der Positionen auf einer Lagerebene in Abhängigkeit von der Größe der Güter gewählt. Für schmalere Güter können mehr Stellplätze auf einer Lagerebene definiert werden als für breitere Güter, wobei beispielsweise zwischen drei und vier möglichen Stellplätzen unterschieden wird.

Vorzugsweise sind an allen definierten Positionen des Überwachungszeitraumes mit der höheren Anzahl von Positionen Lokalisationstransponder angebracht, die zwischen den beiden Überwachungszeiträumen entlang der Reihe an definierten Positionen auf einer Lagerebene so verschoben werden, dass jeder Position jeweils mindestens ein Lokalisationstransponder zugeordnet ist und dass der jeweilige Lokalisationstransponder bei Positionierung eines Gutes auf einer Position aufgrund der Abschirmwirkung des betreffenden Gutes durch kein Lesegerät erfassbar ist. Mit dieser Verschiebbarkeit ist es möglich, die Lokalisationstransponder unmittelbar unterhalb der Güter zu platzieren. Nur wenn sich die Lokalisationstransponder unmittelbar unterhalb der Güter befinden, kann eine entsprechende Abschirmwirkung erreicht werden, so dass die Lokalisationstransponder nicht mehr von den Lesegeräten erfassbar sind und dies wiederum ist für eine entsprechende Genauigkeit des Verfahrens erforderlich. Somit wird über eine Verschiebbarkeit der Lokalisationstransponder eine variable Anpassung des Verfahrens an eine unterschiedliche Anzahl von Positionen auf einer Lagerebene erreicht.

Eine Anpassung des Verfahrens an eine unterschiedliche Anzahl von Positionen kann aber auch dadurch erreicht werden, dass an allen definierten Positionen des ersten und des zweiten Überwachungszeitraumes Lokalisationstransponder angebracht sind und in der Datenverarbeitungseinheit hinterlegt ist, welche Lokalisationstransponder für welchen Überwachungszeitraum gültig sind. Bei Auswertung der RFID-Signale durch die Datenverarbeitungseinheit in der zweiten Lage der Lesegeräte werden dann nur die für diesen Überwachungszeitraum gültigen Lokalisationstransponder berücksichtigt, wenn ein Gut mit einem RFID-Transponder einer Position auf der Lagerebene zugeordnet wird, deren zugeordneter Lokalisationstransponder zu einem ersten Zeitpunkt erfasst wurde und zu einem darauffolgenden Zeitpunkt nicht mehr durch ein Lesegerät erfasst wurde.

Durch die Erfindung wird erreicht, dass in einem Lagersystem mit möglichst wenig Lesegeräten die Position von Gütern auf Lagerebenen bestimmt werden kann, wobei die Anzahl der möglichen Positionen auf einer Lagerebene und damit die Position von Gütern auf der betreffenden Lagerebene veränderlich sein kann. Insbesondere können mit zwei Lesegeräten drei oder vier größere Güter wie Paletten auf einer Lagerebene erfasst und lokalisiert werden, wobei sowohl für drei mögliche Stellplatzpositionen als auch für vier mögliche Stellplatzpositionen nur zwei Lesegeräte erforderlich sind.

Die Verschiebbarkeit und/oder Verschwenkbarkeit von Lesegeräten ermöglicht dabei die vollständige und verlässliche Erfassung aller RFID-Transponder auf einer Lagerebene in verschiedenen Stellplatzsituationen, wobei eine mehrfache Erfassung von RFID-Transpondern nicht nur in Kauf genommen wird, sondern vorteilhaft für eine Lokalisierung genutzt wird, indem eine erste Positionsbestimmung durch eine Unterscheidung zwischen einfach und zweifach erfassten RFID-Transpondern erfolgt. Das Problem der mehrfach erfassten RFID-Transponder wird durch Lokalisationstransponder gelöst, die unterhalb der Güter angeordnet sind und von diesen abgeschirmt werden können.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.
- Fig. 1: einen Regalboden eines Regallagers mit drei Industriepaletten und der vorteilhaften Anordnung von zwei Lesegeräten;
- Fig. 2: einen Regalboden eines Regallagers mit vier Europaletten und der nachteiligen Anordnung von zwei Lesegeräten gemäß Fig. 1;
- Fig. 3: einen Regalboden eines Regallagers mit vier Europaletten und der Anordnung von zwei verschobenen Lesegeräten zur gleichzeitigen Erfassung von Transpondern durch die Lesegeräte;
- Fig. 4: einen Regalboden eines Regallagers mit vier Europaletten und der Anordnung von zwei geschwenkten Lesegeräten;
- Fig. 5: einen Regalboden eines Regallagers ohne Belegung und mit der Anordnung von zwei verschobenen Lesegerätes;
- Fig. 6: einen Regalboden eines Regallagers mit vier Europaletten und der Anordnung von zwei verschobenen Lesegeräten in einem Ausführungsbeispiel mit unvollständiger Belegung der Stellplätze;
- Fig. 7: einen Regalboden eines Regallagers mit vier Europaletten und der Anordnung von zwei verschobenen Lesegeräten gemäß Fig. 3 in einem Ausführungsbeispiel mit unvollständiger Belegung der Stellplätze und einer reduzierten Anzahl Lokalisationstransponder; und
- Fig. 8: einen Regalboden eines Regallagers mit vier Europaletten und der Anordnung von zwei verschobenen Lesegeräten gemäß Fig. 3 in einem Ausführungsbeispiel mit unvollständiger Belegung der Stellplätze und einer erhöhten Anzahl Lokalisationstransponder.

Das erfindungsgemäße System kann beispielsweise in einem Regalsystem mit mehreren horizontalen Lagerebenen realisiert werden, in dem vorzugsweise mehrere übereinander angeordnete Regalböden vorgesehen sind, die horizontal verlaufen und auf denen Güter einzeln platziert werden können. Das System kann jedoch auch in anderen Arten von Lagern eingesetzt werden, wobei eine Lagerebene auch vertikal verlaufen könnte, wenn daran übereinander mehrere Güter angebracht werden können. Beispielsweise könnten Güter an verschiedenen definierten Positionen in eine vertikal verlaufende Schiene eingehängt werden.

Die Erfindung soll jedoch anhand eines Lagersystems mit wenigstens einer horizontal verlaufenden Lagerebene erläutert werden, wobei auch der Boden einer Halle als untere Lagerebene anzusehen ist. Werden auf einem Hallenboden an definierten Positionen Güter abgestellt und diese sollen überwacht werden, eignet sich die Erfindung hierzu ebenso wie zur Überwachung von Regalen mit wenigstens einem Regalboden oberhalb eines Hallenbodens. Insbesondere bei Regalsystemen mit mehreren übereinander angeordneten Regalböden kann die Erfindung jedoch vorteilhaft dazu eingesetzt werden, um Güter auf allen definierten Stellplätzen des Regallagers zu überwachen. Die Höhe der Regalböden und damit des gesamten Regalsystems kann auch so gewählt sein, dass jeder Regalboden von einer Person manuell erreichbar ist. In diesem Fall werden nur Güter kleinerer Ausmaße in einem solchen Regallager gelagert, wobei es sich beispielsweise auch um Kartons oder Behälter mit darin befindlichen Kleingütern handeln kann.

Es kann sich jedoch auch um ein größeres Hochregallager handeln, dessen obere Regalböden üblicherweise nur mit Gabelstaplern zugängig sind. In einem solchen Hochregallager werden Güter typischerweise auf Paletten ein- und ausgelagert, und in einer zentralen Datenverarbeitungsanlage wird protokolliert, welche Palette mit welchen Gütern an welchem Stellplatz im Regallager positioniert ist. So kann zum einen der gesamte Güterbestand im Lager erfasst werden, als auch Gabelstapler bzw. deren Fahrer entsprechend angesteuert werden, um bestimmte Paletten gezielt von einem Stellplatz auslagern zu können.

Um eine funkbasierte Überwachung von Gütern in einem Lager zu erreichen, wird erfindungsgemäß eine RFID-Technologie eingesetzt und jedes Gut mit einem RFID-Transponder, nachfolgend auch kurz Transponder genannt, versehen. Das Regallager wird ferner mit einer Vielzahl von Lesegeräten ausgestattet, um die Transponder der Güter im Regalsystem erfassen zu können. Im Transponder ist eine eindeutige Kennung hinterlegt, die in einer zentralen Datenverarbeitungsanlage direkt einem Gut zugeordnet sein kann. Bei Gütern, die in Behältern oder auf Paletten kommissioniert sind, ist die eindeutige Kennung dem jeweiligen Transport- bzw. Aufbewahrungsmittel zugeordnet und in der zentralen Datenverarbeitungsanlage ist hinterlegt, welche Güter wiederum diesem Transportmittel zugeordnet sind. So ist über die Überwachung des Transportmittels auch eine Überwachung der damit verbundenen Güter möglich.

Dies hat gegenüber einer visuellen Kennzeichnung beispielsweise von Paletten den Vorteil, dass der Gabelstaplerfahrer eine Palette nicht im Lager suchen muss, wenn er sie auslagern soll, sondern ihm kann mitgeteilt werden, an welchem Stellplatz in welchem Regal sich eine bestimmte Palette befindet und der Gabelstaplerfahrer kann diese Palette anfahren und aufnehmen, ohne dass er Informationen von der Palette ablesen muss. Dies erfordert natürlich, dass der Stellplatz der Palette genau bekannt ist und dem Fahrer des Gabelstaplers angezeigt werden kann.

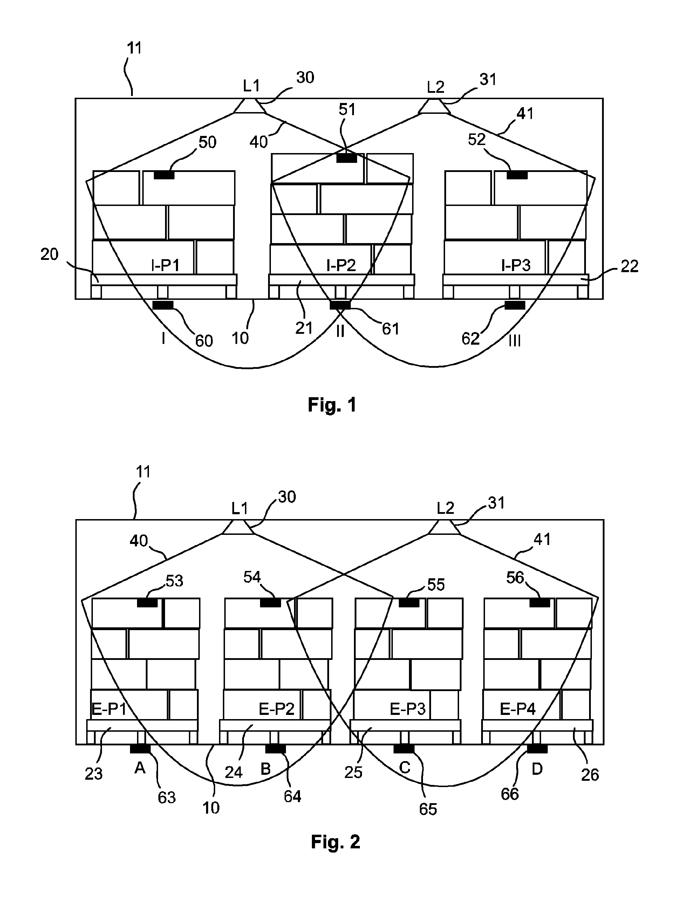

In Fig. 1 ist zur Erläuterung der Erfindung beispielhaft ein Regalboden 10 dargestellt, auf dem drei Paletten 20, 21 und 22 mit Gütern an drei Stellplätzen I, II und III abgestellt sind. Bei diesen Paletten handelt es sich beispielsweise um drei Industriepaletten (I-P1, I-P2, I-P3), die Abmessungen von 1200mm x 1000mm aufweisen. Aufgrund dieser Abmessungen ergeben sich auf dem Regalboden 10 drei definierte Stellplätze I, II und III, an denen Paletten abgestellt werden können. Jede Palette ist mit Gütern beladen, die beispielsweise durch eine Schrumpffolie und/oder Bänder an der Palette befestigt sind. Direkt an einer Palette oder den darauf befindlichen Gütern ist ein Transponder angebracht. In dem in der Fig. 1 dargestellten Ausführungsbeispiel der Erfindung ist an den Gütern jeder Palette 20, 21 und 22 im oberen Bereich jeweils ein Transponder 50, 51 und 52 angebracht. Diese Anordnung ist vorteilhaft, wenn die zugehörigen Lesegeräte oberhalb der Paletten an einer horizontalen Halterung 11 angebracht sind, wie es in diesem Ausführungsbeispiel mit den beiden Lesegeräten 30 und 31 der Fall ist. Die Halterung 11 kann beispielsweise durch eine Strebe oder den nächst höheren Regalboden gebildet werden, an der/dem die Lesegeräte 30 und 31 angebracht werden.

Die Lesegeräte können jedoch auch hinter den Paletten angebracht sein, wobei die Transponder in diesem Fall ebenfalls im hinteren Bereich an den Paletten angeordnet sein sollten. Auch eine Anbringung von Lesegeräten unterhalb der Paletten ist möglich, wobei die Transponder in diesem Fall unten an den Paletten angebracht sein sollten. Insbesondere bei Gütern und/oder Verpackungen aus Materialien, die abschirmend wirken und so die verlässliche Erfassung von Transponder erschweren, hat es sich jedoch als vorteilhaft erwiesen, dass die Transponder oben an einem Gut angebracht werden. So können sie von darüber befindlichen Lesegeräten oberhalb des Gutes erfasst werden, auch wenn die Güter unterschiedliche Höhen haben bzw. Paletten unterschiedlich hoch mit Gütern beladen sind. Der jeweilige Transponder wird dann an der Oberseite der beladenen Palette angebracht, wobei er vorzugsweise von der Oberseite absteht, um negative Beeinflussungen durch den Inhalt und das Material der Palette zu vermeiden und den Transponder zuverlässig erfassen zu können.

Der Transponder kann aber auch an der vorderen Oberkante der Palette angebracht werden, was den Vorteil hat, dass er auch von vorne zu sehen ist. Ist der Transponder beispielsweise in ein aufklebbares Label integriert, das zusätzlich bedruckt werden kann, können diese aufgedruckten Informationen von vorne abgelesen werden. Ferner kann von vorne geprüft werden, ob die Palette mit einem Transponder versehen ist. Auch bei Anbringung des Transponders an der vorderen Oberkante einer Palette steht der Transponder vorzugsweise nach oben ab, um negative Beeinflussungen durch den Inhalt und das Material der Palette zu vermeiden und den Transponder zuverlässig erfassen zu können.

In den Figuren ist ein Transponder stets vorne und unterhalb der vorderen Oberkante an einer Palette angebracht, jedoch dient dies nur der Vereinfachung der Darstellung und ist nicht als Beschränkung anzusehen. Die Anbringung des Transponders richtet sich nach dem jeweiligen Anwendungsfall und der Ausgestaltung der Palette, wobei lediglich die Ausrichtung des Transponders zum Lesegerät bzw. des Lesegerätes zum Transponder so gewählt werden sollte, dass der Abstand möglichst kurz ist bzw. keine negativen Abschirmungen auftreten.

Als RFID-Transponder können handelsübliche Transponder verwendet werden, die vom Fachmann entsprechend ausgestaltet sein können, wobei vorzugsweise passive Transponder ohne eigene Stromversorgung eingesetzt werden. Der Aufbau eines RFID-Transponders sieht prinzipiell eine Antenne, einen analogen Schaltkreis zum Empfangen und Senden (Transceiver), sowie einen digitalen Schaltkreis und einen permanenten Speicher vor. Die verwendeten RFID-Transponder arbeiten beispielsweise im Bereich der Langwelle bei 125-134 kHz, der Kurzwelle bei 13,56 MHz, der UHF bei 865-869 MHz bzw. 950 MHz oder der SHF bei 2,45 GHz und 5,8 GHz.

Vorzugsweise werden für die Erfindung passive UHF-Transponder eingesetzt, da diese besonders kostengünstig sind, einfach an einer Palette angebracht werden können und auch von vielen Firmen genutzt werden. Dadurch müssen beispielsweise keine weiteren Transponder mehr an der Palette angebracht werden, wenn Paletten bereits mit Transpondern versehen das Lager erreichen. Vielmehr besteht dann die Möglichkeit, diese Transponder weiter zu nutzen und so zusätzlich Kosten zu sparen.

Im Regalsystem sind mehrere Lesegeräte angebracht, die jeweils ein hochfrequentes elektromagnetisches Wechselfeld erzeugen, dem die Transponder der Güter im Bereich dieses Wechselfeldes ausgesetzt sind. Die vom Transponder über die Antenne aufgenommene Energie dient während des Kommunikationsvorganges als Stromversorgung für den Transponder. Der so aktivierte Mikrochip im Transponder decodiert die vom Lesegerät gesendeten Befehle und codiert und moduliert die Antwort in das eingestrahlte elektromagnetische Feld. Damit überträgt der Transponder wenigstens seine eigene unveränderliche Seriennummer oder auch weitere Daten des gekennzeichneten Guts an das Lesegerät, so dass das betreffende Lesegerät Transponder im Bereich seines Wechselfeldes erfassen und identifizieren kann.

Die Reichweite des Lesegerätes hängt dabei im Wesentlichen von der Energie des Wechselfeldes ab, wobei es sich bei Betrieb eines Hochregallagers als vorteilhaft erwiesen hat, dass ein Lesegerät eine Leistung von bis zu 2 Watt (ERP) aussenden kann. Hierbei steht die Abkürzung ERP für *Effective Radiated Power* oder *Equivalent Radiated Power,* was eine standardisierte theoretische Maßeinheit für die effektive Strahlungsleistung darstellt. Die effektive Strahlungsleistung ist das Produkt der in eine Sendeantenne eingespeisten Leistung multipliziert mit deren Antennengewinn. Wird keine Richtung angegeben, gilt der Wert für die Hauptstrahlrichtung der Sendeantenne, in der gleichzeitig ihr Antennengewinn am größten ist. Vorzugsweise liegt der volle Öffnungswinkel der Antenne eines Lesegerätes nahe bei 70°, so dass in einem Winkel von 35° zur Hauptstrahlrichtung noch mindestens die Hälfte der maximalen Leistung abgestrahlt wird.

In einem bevorzugten Ausführungsbeispiel der Erfindung verwendet das RFID-System den sogenannten 4-Kanal-Plan, bei dem nur auf 4 von 10 Hochleistungskanälen gesendet wird, wobei es sich nach den derzeitig geltenden Funk-Regularien um die Kanäle 4, 7, 10 und 13 handelt, wenn die ETSI-Norm EN 302 208 in der neusten Version (V 1.2.1) in geltendes Recht umgesetzt wurde. Dadurch kann das System von der so genannten "Listen Before Talk"-Regel (LBT) befreit werden, die in Europa dazu dient, das dem UHF-Bereich zur Verfügung stehende sehr schmale Frequenzband besser zwischen den diversen Nutzern aufzuteilen. Um eine schnelle Zuteilung der Frequenz für die neue Technologie zu ermöglichen, schreibt die LBT-Regel vor, dass ein Lesegerät vor dem Senden prüfen muss, ob ein anderer Dienst im Kanal arbeitet. Ist dies der Fall, muss es auf einen anderen Kanal ausweichen. Zudem dürfen die Lesegeräte nur vier Sekunden lang senden, bevor sie wieder das Vorhandensein anderer Nutzungen prüfen müssen. Da dies in der Praxis zu Problemen führt, hat sich der 4-Kanal-Plan für die Erfindung als vorteilhaft erwiesen, da zwar nur auf 4 Kanälen gesendet werden darf, die LBT-Regel jedoch nicht berücksichtigt werden muss. Der Betrieb anderer RFID-Systeme auf UHF-Frequenzen im Bereich des erfindungsgemäßen Systems sollte in diesem Fall jedoch vermieden werden, um die Lokalisierungsgenauigkeit und die Zuverlässigkeit der aus den RFID-Signalen gewonnenen Aussagen nicht zu beinträchtigen. Jedoch können auf den anderen Kanälen parallel zum 4-Kanal-Betrieb der RFID-Anwendungen leistungsschwache Funkanwendungen mit einer kurzen Reichweite, sogenannte Short Range Devices (SRD), betrieben werden.

Die beiden in dem Ausführungsbeispiel der Fig. 1 verwendeten Lesegeräte 30 und 31 sind oberhalb der drei Industriepaletten 20, 21 und 22 an den Positionen L1 und L2 angebracht. Die Lesegeräte sind dabei so über die Länge des Regalbodens 10 angeordnet, dass die ausgestrahlten Wechselfelder 40 und 41 der beiden Lesegeräte 30 und 31 die Transponder 50, 51 und 52 an allen drei Paletten erfassen können. Dabei sind die Positionen L1 und L2 so gewählt, dass ein Transponder 51 an einer mittleren Palette I-P2 stets von beiden Lesegeräten 30 und 31 erfasst wird, wenn dieser Stellplatz II besetzt ist, während die Transponder 50 und 52 auf den äußeren Positionen I und III nur von dem jeweiligen Lesegerät auf dieser Seite erfasst werden können.

Durch diese Anordnung gemäß Fig. 1 ist es mit zwei Lesegeräten 30 und 31 möglich, die Position von maximal drei Industriepaletten auf drei Positionen I, II und III auf dem Regalboden 11 verlässlich zu bestimmen. Dazu sind die Lesegeräte 30 und 31 an eine zentrale Datenverarbeitungsanlage oder Datenverarbeitungseinheit angeschlossen, in welcher eine Logik hinterlegt ist, mit welcher die RFID-Signale entsprechend ausgewertet werden können. In dem dargestellten Fall beinhaltet diese Logik, dass wenigstens eine Auswertung erfolgt, welche Transponder ausschließlich von einem der beiden Lesegeräte erfasst wurden. Der Transponder 50, der aufgrund der Reichweite des Wechselfeldes 40 nur von dem linken Lesegerät 30 erfasst wurde, kann sich nur links auf dem ersten Stellplatz I befinden, so dass in der Datenverarbeitungsanlage als Position der Palette I-P1 mit diesem Transponder 50 die Position I vermerkt wird. Diese Palette I-P1 kann sich nicht auf dem mittleren Stellplatz II befinden, da der zugehörige Transponder 50 sonst auch von dem anderen Lesegerät 31 erfasst worden wäre, und auf dem rechten Stellplatz III kann sich diese Palette I-P1 ebenfalls nicht befinden, da sie sonst ebenfalls von dem zweiten Lesegerät 31 erfasst worden wäre bzw. nicht von dem ersten Lesegerät 30 erfasst werden konnte.

Der Transponder 52, der aufgrund der Reichweite des Wechselfeldes 41 nur von dem rechten Lesegerät 31 erfasst wurde, kann sich dagegen aufgrund der gleichen Logik nur rechts auf dem Stellplatz III befinden, was in der Datenverarbeitungsanlage als Position der zugehörigen Palette I-P3 mit diesem RFID-Transponder vermerkt wird. Der Transponder 51 hingegen wird im Überschneidungsbereich der beiden Wechselfelder 40 und 41 von beiden Lesegeräten 30 und 31 erfasst, was von der Logik so gewertet werden kann, dass sich die Palette I-P2 mit diesem Transponder 51 auf der mittleren Position II befinden muss, denn nur für diese Position kann eine solche Doppelerfassung eintreten.

Durch den beschriebenen Aufbau kann somit für drei Industrieplatten verlässlich deren Position auf dem Regalboden 10 bestimmt und für die weitere Verwendung in einem Überwachungssystem hinterlegt werden. Dabei müssen nur zwei Lesegeräte eingesetzt werden, was einen Vorteil gegenüber Lösungen darstellt, bei denen beispielsweise über jedem definierten Stellplatz auf einem Regalboden ein Lesegerät angeordnet ist. Außerdem können Überschneidungen von Wechselfeldern und dadurch entstehende Doppelerfassungen vorteilhaft dazu genutzt werden, mittels einer entsprechenden Logik eine Positionsbestimmung durchzuführen. Dabei sind die beiden Lesegeräte möglichst so an den Positionen L1 und L2 oberhalb der Paletten angeordnet, dass ihre Wechselfelder die Paletten so abdecken, dass auch in den Randbereichen noch eine genaue Erfassung möglich ist.

Während jeder Transponder 50, 51 und 52 jeweils einer der Paletten I-P1, I-P2 und I-P3 zugeordnet ist, ist zur Verbesserung der Genauigkeit der Positionsbestimmung jedem der Stellplätze I, II und III jeweils ein Lokalisationstransponder 60, 61 und 62 zugeordnet. Diese Lokalisationstransponder 60, 61 und 62 sind jeweils so unterhalb der Paletten I-P1, I-P2 und I-P3 angeordnet, dass sie durch diese entsprechend verdeckt und abgeschirmt werden. Auch wenn sich alle Lokalisationstransponder 60, 61 und 62 in Reichweite eines oder beider Wechselfelder 40 und 41 der beiden Lesegeräte 30 und 31 befinden, ist durch diese Abschirmung eine Erfassung der Lokalisationstransponder 60, 61 und 62 durch die Lesegeräte 30 und 31 nicht möglich.

Zur Realisierung der Abschirmwirkung und zur Vermeidung einer unbeabsichtigten Erfassung der Lokalisationstransponder 60, 61 und 62 beinhaltet jede Palette I-P1, I-P2 und I-P3 ein Material, das gegenüber den elektromechanischen Wechselfeldern 40 und 41 der Lesegeräte 30 und 31 eine abschirmende Wirkung aufweist. Dabei können zum einen die Güter selbst und/oder deren Verpackungen aus einem derartigen Material bestehen. Es können aber auch eine oder mehrere separate Lagen eines derartigen abschirmenden Materials auf den Paletten I-P1, I-P2 und I-P3 positioniert werden. Je nach Art der Güter auf den Paletten I-P1, I-P2 und I-P3 können diese separaten Materiallagen sowohl unterhalb der Güter als auch zwischen den Gütern als auch oberhalb der Güter als Abschluss positioniert werden.

Als Materialien mit einer Abschirmwirkung gegenüber elektromechanischer Strahlung geeignet erscheinen beispielsweise verschiedene dünne Metallbleche, wie beispielsweise Kupferbleche, oder Metallfolien, wie beispielsweise Aluminiumfolie, oder auch Verbundmaterialien, wie beispielsweise mit Aluminiumfolie kaschiertes Papier oder kaschierter Karton. Insbesondere mit Aluminiumfolie kaschiertes Papier kommt häufig bei der Verpackung von Gütern zur Anwendung, so dass derart verpackte Güter bereits eine sehr gute Abschirmwirkung aufweisen.

Jeder Lokalisationstransponder 60, 61 und 62 ist mit seiner unveränderlichen Seriennummer in der zentralen Datenverarbeitungsanlage hinterlegt und jedem Lokalisationstransponder 60, 61 und 62 ist dort auch genau einer der Stellplätze I, II und III als Position auf der Lagerebene 10 zugeordnet. Solange die Paletten I-P1, I-P2 und I-P3 auf den Stellplätzen I, II und III abgestellt sind, können die Lokalisationstransponder 60, 61 und 62 von den Lesegeräten 30 und 31 nicht gelesen und erfasst werden. Die Erkennung der Belegung der Stellplätze I, II und III kann dann beispielsweise in der Datenverarbeitungsanlage dazu herangezogen werden, Fehlinterpretationen beim Erfassen und Verarbeiten der RFID-Signale der Transponder 50, 51 und 52 zu vermeiden und die für die Paletten I-P1, I-P2 und I-P3 bestimmten Positionen zu bestätigen.

Mit Entnahme der Paletten I-P1, I-P2 und I-P3 aus der Regalebene 10 wird die Abschirmung aufgehoben und die Lokalisationstransponder 60, 61 und 62 können von den Lesegeräten 30 und 31 erfasst werden. Die nunmehr erfassbaren RFID-Signale der Lokalisationstransponder 60, 61 und 62 werden von den Lesegeräten 30 und 31 an die Datenverarbeitungsanlage weitergeleitet und dort wird zu den Stellplätzen I, II und III vermerkt, dass die bisher an den Stellplätzen I, II und III registrierten Paletten I-P1, I-P2 und I-P3 entnommen wurden und dass diese Stellplätze I, II und III wieder entsprechend neu belegt werden können.

Sind benachbart zum Regalboden 10 weitere Regalböden links und/oder rechts davon mit einem RFID-System ausgestattet, so muss für eine genaue Positionsbestimmung der Paletten grundsätzlich gewährleistet werden, dass sich die Erfassungsbereiche der jeweils benachbarten Regalböden nicht überschneiden. Zudem dürfen keine Transponder auf Gütern erfasst werden, die im Gang vor dem Regalboden 10 transportiert werden. Vielmehr sind die Transponder und Lokalisationstransponder ausschließlich dann zu erfassen, wenn die Güter in das Regal eingelagert oder aus dem Regal ausgelagert werden oder statisch auf dem Regalboden 10 lagern. Dies kann beispielsweise durch die Wahl geeigneter Sendeleistungen der Lesegeräte realisiert werden.

Auf einem Regalboden 10 können aber nicht nur Industriepaletten, sondern beispielsweise auch Europaletten gelagert werden, die mit Abmessungen von 1200mm x 800mm weniger breit sind als Industriepaletten. Bedingt durch die anderen Abmessungen finden auf dem gleichen Regalboden 10 somit gegebenenfalls vier Europaletten Platz, wie es schematisch in Fig. 2 dargestellt ist. Somit ergibt sich auch eine höhere Anzahl von definierten Stellplätzen A, B, C und D, an denen die vier Europaletten 23, 24, 25 und 26 (E-P1, E-P2, E-P3, E-P4) gelagert werden können, die mit RFID-Transpondern 53, 54, 55 und 56 versehen sind. Wird für eine solche Anordnung die Anzahl und Anordnung der Lesegeräte 30 und 31 beibehalten, ist eine eindeutige Positionsbestimmung und eine Erfassung aller Lokalisationstransponder 63, 64, 65 und 66 gemäß der oben beschriebenen Vorgehensweise nicht mehr möglich, was anhand der Fig. 2 erläutert werden soll.

Wie in Fig. 2 ersichtlich, können zwar die Positionen A und B der beiden Paletten E-P1 und E-P2 mit den Transpondern 53 und 54 von den Positionen C und D der beiden Paletten E-P3 und E-P4 mit den Transpondern 55 und 56 genau bestimmt werden, da die beiden Paletten E-P1 und E-P2 mit den Transpondern 53 und 54 mit dem Wechselfeld 40 des linken Lesegerätes und die beiden Paletten E-P3 und E-P4 mit den Transpondern 55 und 56 mit dem Wechselfeld 41 des rechten Lesegerätes erfasst werden. Das Wechselfeld 40 kann jedoch nicht zwischen den Transponder 53 und 54 unterscheiden, so dass die beiden Paletten E-P1 und E-P2 auch nicht eindeutig den Positionen A und B zugeordnet werden können. Gleiches gilt auch für das Wechselfeld 41, das nicht zwischen den Transponder 55 und 56 unterscheiden kann, so dass die beiden Paletten E-P3 und E-P4 auch nicht eindeutig den Positionen C und D zugeordnet werden können. Somit kann lediglich ermittelt werden, ob sich eine oder zwei Paletten jeweils auf der linken oder rechten Seite des Regalbodens 10 befinden.

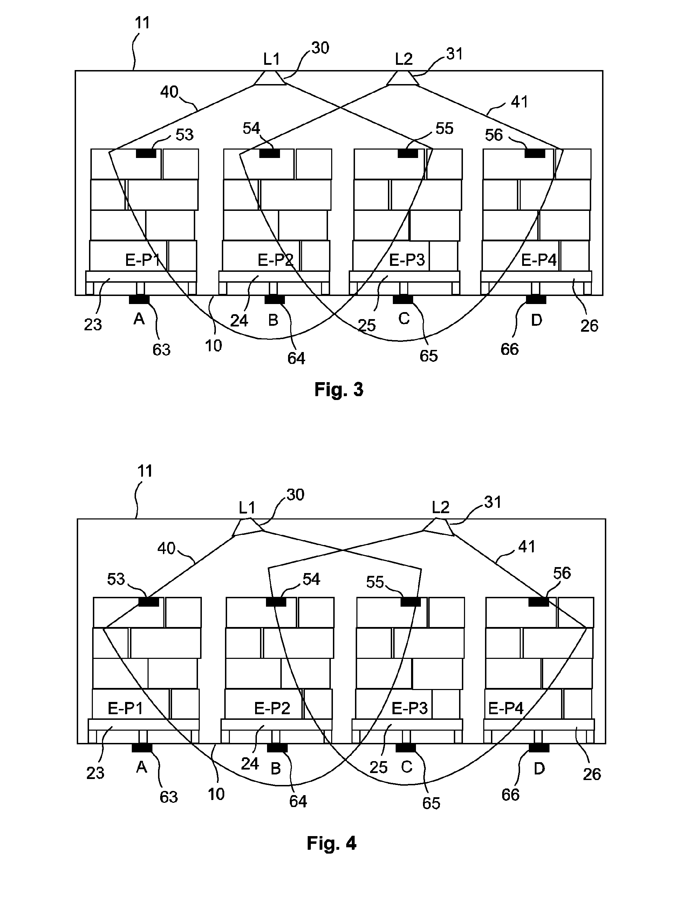

Um die Position von Gütern auf einem Regalboden 10 mit variabler Anzahl von definierten Stellplätzen bestimmen zu können, ist daher erfindungsgemäß vorgesehen, dass wenigstens eines der Lesegeräte 30 und 31 entlang des Regalbodens 10 verschiebbar ausgebildet ist, so dass die Positionen L1 und L2 der Lesegeräte variabel sind. Durch diese Verschiebbarkeit kann die Symmetrie der Situation in Fig. 2 aufgehoben und die Lesegeräte so platziert werden, dass die beschriebene Logik unter Heranziehung weiterer Schritte erneut angewendet werden kann. Die dadurch erzielte Situation ist in Fig. 3 dargestellt. Bei dieser Verschiebung der Positionen L1 und L2 der Lesegeräte 30 und 31 zur Mitte des Regalbodens 10 hin überschneiden sich die Wechselfelder 40 und 41 der beiden Lesegeräte nun wieder so, dass die beiden mittleren Transponder 54 und 55 wieder von beiden Lesegeräten 30 und 31 erfasst werden.

Der gleiche Effekt kann je nach Abmessungen des Systems und der Parameter, beispielsweise der Sendeleistung der Lesegeräte 30 und 31, eintreten, wenn die Lesegeräte 30 und 31 ergänzend oder alternativ zu einer Verschiebbarkeit auch schwenkbar ausgeführt sind. Dies ist in der Fig. 4 dargestellt, in der beide Lesegeräte 30 und 31 in Richtung der Mitte des Regalbodens geschwenkt dargestellt sind. Möglich ist dabei auch, beide Lesegeräte 30 und 31 in die gleiche Richtung zu schwenken und auszurichten, um eine Unterscheidung der Transponder zu ermöglichen. Es kann jedoch auch vorgesehen sein, dass für ein Lesegerät 30 an der Position L1 die Position und Ausrichtung nicht verändert wird, sondern nur das zweite Lesegerät 31 entsprechend verschoben wird. Auch eine einzelne Verschwenkbarkeit eines Lesegeräts 31 ist denkbar, um einen Zustand, in dem nicht beide mittleren Transponder 54 und 55 von beiden Lesegeräten erfasst werden können, in einen Zustand umzuwandeln, in dem dies der Fall ist.

Die Verschiebung eines Lesegerätes kann beispielsweise über eine Schiene an der Halterung 11 erfolgen, entlang der das Lesegerät direkt manuell verschoben werden kann. Möglich ist auch eine Verschiebung mittels Zugseilen, die manuell entfernt von dem jeweiligen Lesegerät betätigt werden können. Dies ist insbesondere für Lesegeräte an hohen Regalböden geeignet, die nur schwer direkt zu erreichen sind. Ferner kann die Verschiebung auch automatisch erfolgen und beispielsweise durch einen Motor bewirkt werden. Zudem besteht die Möglichkeit, nur eine begrenzte Anzahl von Positionen für die Lesegeräte vorzusehen, indem in der Halterung 11 mehrere Bohrungen vorgesehen sind, in denen das Lesegerät mittels geeigneter Befestigungsmittel, wie beispielsweise Schrauben, befestigt werden kann.

Die Schwenkbarkeit eines Lesegerätes kann beispielsweise durch Scharniere oder Gelenke erreicht werden, über welche das Lesegerät gelagert ist. Dabei kann das Lesegerät wenigstens um eine Achse schwenkbar ausgebildet sein, wenn beispielsweise Scharniere eingesetzt werden. Es kann aber auch beliebig um mehrere Achsen schwenkbar sein, wenn beispielsweise Kugelgelenke eingesetzt werden. Auch das Schwenken eines Lesegerätes kann manuell oder motorgetrieben erfolgen. Weiterhin ist es möglich, anstelle von Scharnieren oder Gelenken eine separate Halterung für die Lesegeräte vorzusehen, die den Schwenkwinkel für das Lesegerät fest vorgibt und die durch eine Halterung mit einem anderen fest vorgegebenen Schwenkwinkel ersetzt werden kann. Zum Einstellen eines anderen Schwenkwinkels muss hierbei das Lesegerät mit der Halterung demontiert werden, die Halterung muss durch eine andere Halterung ausgetauscht werden und anschließend muss das Lesegerät mit der neuen Halterung wieder montiert werden.

Allgemein zu beachten ist, dass die Lesegeräte so an der Halterung 11 befestigt sein müssen, dass eine Palette, die die Halterung 11 nur partiell belastet, nicht zu einer Verkippung oder zu einer transversalen Verschiebung der Lesegeräte führt. Um ein Lesegerät bis zu einer vorgegebenen Position zu verschieben bzw. in eine vorgegebene Lage zu schwenken, können Anschläge oder sonstige Mittel vorgesehen sein, um das Lesegerät entsprechend auszurichten.

In den Zuständen der Figuren 3 und 4 kann somit erreicht werden, dass für die beiden äußeren Transponder 53 und 56 bestimmt werden kann, dass sich die zugehörigen Paletten 23 und 26 an den Positionen A und D befinden, da nur an diesen beiden Positionen Transponder ausschließlich von dem jeweiligen Lesegerät auf dieser Seite erfasst werden können. Für die beiden mittleren Transponder 54 und 55 ist ferner nun zwar klar, dass sie sich nicht an einer Palette auf einer der Außenpositionen A oder D befinden, es ist jedoch weiterhin unklar, ob sie sich an einer Palette an der Position B oder an der Position C befinden, da beides möglich wäre.

Zusätzlich zur Verschiebbarkeit und/oder Verschwenkbarkeit der Lesegeräte 30 und 31 ist daher erfindungsgemäß die Erfassung von Lokalisationstranspondern 63, 64, 65 und 66 an den Positionen A, B, C und D vorgesehen. Die Zuordnung der Lokalisationstransponder zu den Stellplätzen A bis D ist in der Datenverarbeitungsanlage hinterlegt. Solange auf einem Stellplatz keine Palette abgestellt wurde, kann der zugehörige Lokalisationstransponder gelesen werden und der Stellplatz ist in der Datenverarbeitungsanlage als frei gespeichert. Kann der gleiche Lokalisationstransponder bei einem späteren Erfassungsvorgang nicht mehr gelesen werden, bedeutet dies, dass zwischenzeitlich eine Palette auf diesem Stellplatz abgestellt wurde. Da der zugehörige Transponder der Palette gleichzeitig ebenfalls neu erfasst wird, kann die Logik der Datenverarbeitungsanlage daraus schließen, dass die neu hinzugekommene Palette auf dieser Lagerebene genau auf diesem Stellplatz abgestellt wurde.

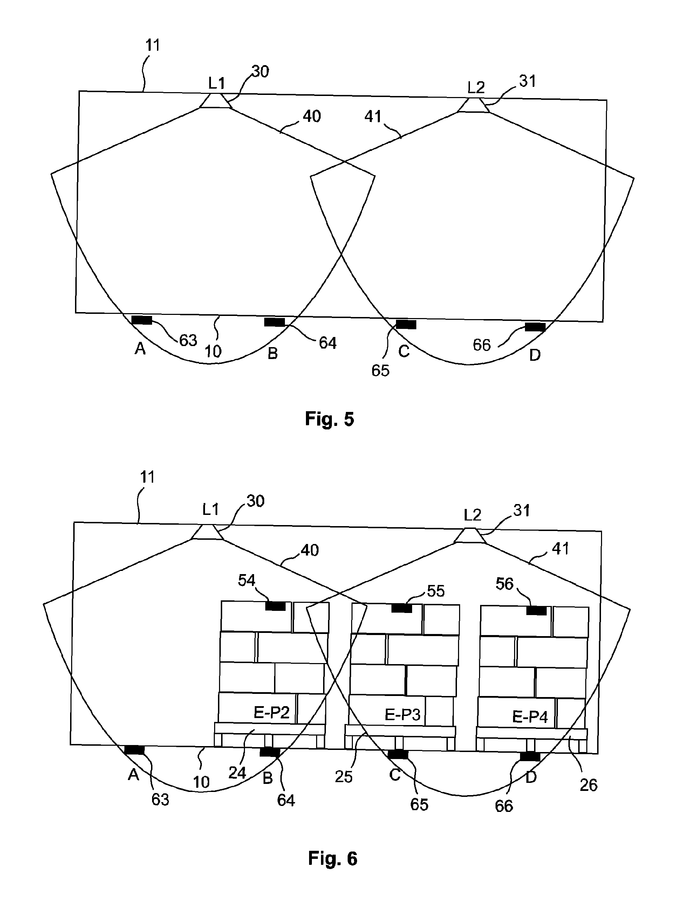

Allerdings kann es sein, dass es in den Zuständen der Figuren 2 bis 4 nicht möglich ist, die Lokalisationstransponder 63 und 66 zu erfassen, da diese zu weit außen liegen. Vielmehr sind in diesen Zuständen nur die Lokalisationstransponder 64 und 65 erfassbar. Da es bei entsprechend angebrachten Lesegeräten nur auf den beiden inneren Positionen zu Doppelerfassungen von Paletten-Transpondern kommt, kann es jedoch ausreichend sein, zur Konkretisierung dieser Dopplerfassungen genau an diesen Positionen Lokalisationstransponder vorzusehen. Zur Erfassung aller Lokalisationstransponder 63 bis 66 müssten die Lesegeräte 30 und 31 entsprechend nach außen verschoben bzw. gedreht werden, was es dann ermöglichen würde, die Genauigkeit der Erfassung auf allen Positionen zu verbessern. Dies ist in Fig. 5 beispielhaft für eine leere Lagerebene dargestellt.

Mit jeder Palette, die nach dem Erfassen der Lokalisationstransponder 63 bis 66 auf einem der Stellplätze A bis D abgestellt wird, wird gemäß Fig. 6 auch einer dieser Lokalisationstransponder 63 bis 66 abgeschirmt. Immer dann, wenn einer der Lokalisationstransponder 63 bis 66 durch eine abgestellte Palette abgeschirmt wird, wird in der Datenverarbeitungsanlage hinterlegt, dass der diesem Lokalisationstransponder 63 bis 66 zugeordnete Stellplatz A bis D mit einer der Paletten E-P1 bis E-P4 belegt worden ist. Über die Erfassung des der abgestellten Palette E-P1 bis E-P4 zugeordneten Transponders 53 bis 56 kann somit diese Palette mittels einer Logik der Datenverarbeitungsanlage dem abgeschirmten Lokalisationstransponder 63 bis 66 zugeordnet werden. Solange noch keine Palette beispielsweise auf dem Stellplatz A des Lokalisationstransponders 63 abgestellt wurde, kann dieser vom Wechselfeld 40 des Lesegerätes 30 weiterhin erfasst werden und in der Datenverarbeitungsanlage bleibt der entsprechende Eintrag erhalten, dass der Stellplatz A noch frei ist.

Dabei wertet eine in der Datenverarbeitungsanlage hinterlegte Logik vorzugsweise nicht immer wieder alle Signale aus, um immer wieder neu eine vollständige Positionsbestimmung auf einem Regalboden 10 durchzuführen, sondern einmal ermittelte Positionen werden von der intelligenten Datenverarbeitungsanlage dazu verwendet, um logisch zu ermitteln, welche Änderungen auf dem Regalboden 10 eingetreten sein können, wenn Paletten mit Transpondern entfernt werden oder neu hinzukommen.

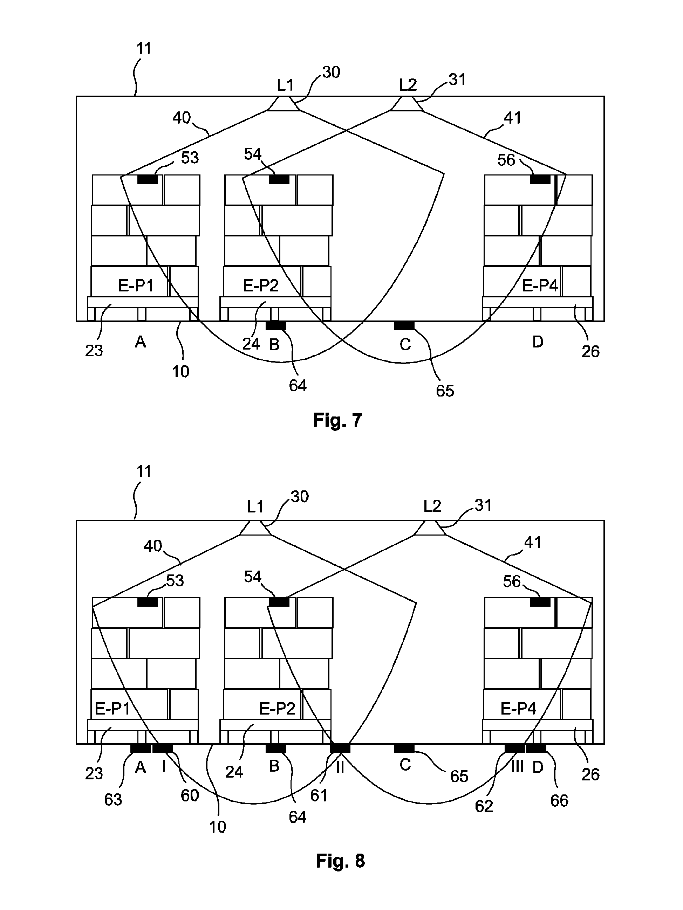

Eine vergleichbare Logik findet auch dann Anwendung, wenn gemäß Fig. 7 nur an den Stellplätzen B und C Lokalisationstransponder 64 und 65 verwendet werden. Hier ist es vorteilhaft, dass die Lesegeräte 30 und 31 so angeordnet sind, dass die beiden Transponder 54 und 55 der Paletten E-P2 und E-P3 von beiden Wechselfeldern 40 und 41 gleichzeitig erfasst werden. Dadurch kann nach der beispielhaften Entnahme der Palette E-P3 der Lokalisationstransponder 65 des Stellplatzes C erfasst werden und über die Logik kann spätestens jetzt dem von beiden Wechselfeldern 40 und 41 gleichzeitig erfassten Transponder 54 die Position auf Stellplatz B zugeordnet werden. Eine vergleichbare Vorgehensweise ist auch möglich, wenn nur eines der beiden Lesegeräte 30 und 31 verschoben wird, so dass nur einer der beiden Transponder 54 und 55 von beiden Wechselfeldern 40 und 41 gleichzeitig erfassbar ist.

Wenn auf dem Regalboden 10 nach vier Europaletten wieder drei Industriepaletten gelagert werden sollen, können die Lesegeräte 30 und 31 für eine Erfassung der einzelnen Paletten einfach wieder in die Positionen L1 und L2 gemäß Fig. 1 gebracht werden. Dies ist insbesondere dann erforderlich, wenn die drei Industriepaletten unterschiedliche Höhen aufweisen. Würden hier einfach nur die Positionen L1 und L2 der Lesegeräte 30 und 31 für vier Europaletten übernommen werden, würde dies zu einer hohen Ungenauigkeit bei der Ermittlung und Zuordnung der Stellplätze I bis III zu den einzelnen Paletten I-P1 bis I-P3 führen. Mit der Einstellung der Positionen L1 und L2 gemäß Fig. 1 für die beiden Lesegeräte 30 und 31 hingegen wird sichergestellt, dass jeder Industriepalette I-P1 bis I-P3 der richtige Stellplatz I bis III auf dem Regalboden 10 zugeordnet wird.

Da für eine Umstellung der Belegung des Regalbodens 10 von einer Belegung mit vier Europaletten auf eine Belegung mit drei Industriepaletten nicht nur eine Anpassung der Positionen L1 und L2 für die Lesegeräte 30 und 31 erforderlich ist, ist zur Vereinfachung dieser Umstellung weiterhin vorgesehen, dass die Lokalisationstransponder 63 bis 66 einfach verschoben werden können. Dafür sind die Lokalisationstransponder 63 bis 66 verschiebbar beispielsweise auf einer Schiene angebracht, die unterhalb des Regalbodens 10 angeordnet ist. Zur Umstellung von einer Belegung des Regalbodens 10 mit vier Europaletten auf eine Belegung mit drei Industriepaletten wird der Lokalisationstransponder 63 dann einfach von Position A auf Position I und der Lokalisationstransponder 66 von Position D auf Position III verschoben. Sowohl der Lokalisationstransponder 64 von Position B als auch der Lokalisationstransponder 65 von Position C werden beide auf Position II verschoben, um Fehlinterpretationen der Belegungssituation zu vermeiden, wenn einer der beiden Lokalisationstransponder 64 und 65 keiner neuen Position zugeordnet ist. Für eine erneute Umstellung von einer Belegung mit drei Industriepaletten auf eine Belegung mit vier Europaletten können die Lokalisationstransponder 63 bis 66 dann wieder von den Positionen I bis III in die Positionen A bis D zurückgeschoben werden. Das bedeutet für Lokalisationstransponder 63 eine Verschiebung von Position I auf Position A und für Lokalisationstransponder 66 entsprechend eine Verschiebung von Position III auf Position D. Der Lokalisationstransponder 64 wird von Position II wieder auf Position B verschoben, während der Lokalisationstransponder 65 von Position II wieder auf Position C verschoben wird.

Eine andere Möglichkeit für eine flexible Anwendung des Systems bei Belegung des Regalbodens 10 mit einer unterschiedlichen Anzahl von Paletten ist, wie in Fig. 8 dargestellt, eine gemeinsame Anordnung der Lokalisationstransponder 60 bis 62 für drei Industriepaletten und der Lokalisationstransponder 63 bis 66 für vier Europaletten unterhalb des Regalbodens 10. In der Datenverarbeitungsanlage wird bei dieser Ausführung des Systems entsprechend hinterlegt, welche Lokalisationstransponder für welche Belegung gültig sind. Je nach Belegung finden dann die dieser Belegung zugeordneten RFID-Signale bei der Auswertung durch eine Logik der Datenverarbeitungsanlage Berücksichtigung. Obwohl in Fig. 8 durch die Entnahme der Palette E-P3 sowohl der Lokalisationstransponder 65 als auch der Lokalisationstransponder 61 erfasst werden können, ist für die Auswertung nur der Lokalisationstransponder 65 relevant.

Welche Lokalisationstransponder relevant und zu berücksichtigen sind, kann der Logik der Datenverarbeitungsanlage dadurch bekannt sein, dass ihr mitgeteilt wird, ob es sich momentan um eine Belegung von drei Industriepaletten oder vier Europaletten handelt. Andererseits könnte auch vorgesehen sein, dass die Datenverarbeitungsanlage diese Information eigenständig aus der Erfassung von Transpondern erhält. Beispielsweise könnte die Datenverarbeitungsanlage auf eine Belegung mit vier Europaletten schließen, wenn neben dem Lokalisationstransponder 65 auf dem Regalboden 10 auch noch die Transponder von drei weiteren Paletten E-P1, E-P2 und E-P4 erfassbar sind. Daraus erkennt die Logik, dass der Regalboden 10 aktuell mit vier Paletten E-P1 bis E-P4 belegbar ist und dass aus diesem Grund die Lokalisationstransponder 63 bis 66 bei der Auswertung der RFI D-Signale und bei der Bestimmung der Positionen für die Paletten E-P1 bis E-P4 zu berücksichtigen sind. Handelt es sich um eine Belegung mit drei Industriepaletten, sind dagegen die Lokalisationstransponder 60, 61 und 62 zu berücksichtigen. Durch die Anordnung aller Lokalisationstransponder für verschiedene Belegungen kann dementsprechend ohne weiteren technischen oder organisatorischen Aufwand beliebig zwischen den einzelnen Belegungen gewechselt werden.

Sowohl durch die Verschiebbarkeit der Lokalisationstransponder 63 bis 66 als auch durch die Anordnung von Lokalisationstranspondern 60 bis 66 für unterschiedliche Belegungen des Regalbodens 10 wird eine hohe Flexibilität des Systems bei einer wechselnden Belegung des Regalbodens 10 mit einer unterschiedlichen Anzahl von Gütern erreicht. Das System ist dabei auch nicht auf den oben beschriebenen Wechsel zwischen Industriepaletten und Europaletten beschränkt, da die Anzahl der Positionen und damit verbunden auch die Anzahl der Lokalisationstransponder in Abhängigkeit von der Belegung des Regalbodens 10 gewählt werden kann.

### Bezugszeichenliste:

- 10: Lagerebene, Regalboden
- 11: Halterung, Schiene
- 20, 21, 22: Industriepalette
- 23, 24, 25, 26: Europalette
- 30, 31: Lesegerät
- 40,41: Wechselfeld
- 50,51,52,53,54,55,56: RFID-Transponder
- 60, 61, 62, 63, 64, 65, 66: Lokalisationstransponder

- I-P1, I-P2, I-P3: Industriepalette
- I, II, III: Position/Stellplatz Industriepalette
- E-P1, E-P2, E-P3, E-P4: Europalette
- A, B, C, D: Position/Stellplatz Europalette

- L1, L2: Position Lesegerät

## Patentansprüche

1. System zur Lagerung und Überwachung von Gütern, umfassend wenigstens eine Lagerebene (10), auf der die Güter an definierten Positionen platzierbar sind, so dass jedes Gut einer definierten Position zugeordnet ist, wobei die Güter jeweils mit wenigstens einem passiven RFID-Transponder versehen sind und das System wenigstens ein Lesegerät (30, 31) zur Erfassung dieser RFID-Transponder umfasst und das wenigstens eine Lesegerät (30, 31) in Verbindung mit einer Datenverarbeitungseinheit steht, welche Mittel zur Auswertung erfasster RFID-Signale der RFID-Transponder aufweist und jeder Lagerebene (10) wenigstens zwei Lesegeräte (30, 31) zugeordnet sind,
**dadurch gekennzeichnet,**
**dass** die definierten Positionen für Güter nebeneinander in einer Reihe auf einer Lagerebene (10) angeordnet sind, und wenigstens ein Lesegerät (30, 31) entlang dieser Reihe von definierten Positionen verschiebbar und/oder in Bezug zu dieser schwenkbar ausgeführt ist, dass die Güter wenigstens ein Material beinhalten, das gegenüber elektromagnetischen Feldern eine Abschirmwirkung aufweist, und dass an wenigstens einer definierten Position auf einer Lagerebene (10) ein Lokalisationstransponder so angeordnet ist, dass der Lokalisationstransponder bei Positionierung eines Gutes im Bereich dieses Lokalisationstransponders aufgrund der Abschirmwirkung des betreffenden Gutes durch kein Lesegerät (30, 31) erfassbar ist.

2. System nach Anspruch 1,
**dadurch gekennzeichnet,**
**dass** wenigstens ein Lesegerät (30, 31) durch Verschieben und/oder Verschwenken aus einer ersten Lage in eine zweite Lage bewegbar ist, wobei in der ersten Lage bei Belegung aller Positionen der zugeordneten Lagerebene (10) mit Gütern kein RFID-Transponder gleichzeitig von zwei benachbarten Lesegeräten (30, 31) erfassbar ist, während in der zweiten Lage bei Belegung aller Positionen dieser Lagerebene (10) mit Gütern wenigstens ein RFID-Transponder gleichzeitig von zwei benachbarten Lesegeräten (30, 31) erfassbar ist.

3. System nach Anspruch 2,
**dadurch gekennzeichnet,**
**dass** der wenigstens eine Lokalisationstransponder im Bereich einer Position auf der Lagerebene (10) angeordnet ist, auf der bei voller Belegung aller definierten Positionen der Lagerebene (10) das Gut mit dem RFID-Transponder angeordnet ist, der in der zweiten Lage der Lesegeräte (30, 31) gleichzeitig von zwei benachbarten Lesegeräten erfassbar ist.

4. System nach einem der Ansprüche 1 bis 3,
**dadurch gekennzeichnet,**
**dass** Lokalisationstransponder im Bereich aller Positionen auf der Lagerebene (10) angeordnet sind, auf denen bei voller Belegung aller definierten Positionen der Lagerebene (10) Güter mit RFID-Transpondern angeordnet sind.

5. System nach einem der Ansprüche 1 bis 4,
**dadurch gekennzeichnet,**
**dass** die Anzahl der Lokalisationstransponder für eine Lagerebene (10) höher ist als die maximale Anzahl definierter Positionen für eine volle Belegung der Lagerebene (10) mit Gütern.

6. System nach einem der Ansprüche 1 bis 5,
**dadurch gekennzeichnet,**
**dass** eine Lagerebene (10) horizontal verläuft und die wenigstens zwei Lesegeräte (30, 31) oberhalb der Lagerebene (10) und der Güter angeordnet sind, wobei die RFID-Transponder jeweils im oberen Bereich der Güter angebracht sind und der wenigstens eine Lokalisationstransponder unterhalb der Güter angeordnet ist.

7. System nach Anspruch 6,
**dadurch gekennzeichnet,**
**dass** die wenigstens zwei Lesegeräte (30, 31) an einer Halterung angeordnet sind, die parallel zur Lagerebene (10) verläuft, wobei die Halterung eine Schiene umfasst, innerhalb der das wenigstens eine Lesegerät (30, 31) verschiebbar angebracht ist.

8. Verfahren zur Überwachung von Gütern in einem System nach einem der Ansprüche 1 bis 7, bei dem Signale der Lesegeräte (30, 31) zur Auswertung an eine Datenverarbeitungseinheit übermittelt werden, wobei die Auswertung eine Zuordnung von RFID-Transpondern und den ihnen zugeordneten Gütern zu einer Position auf einer Lagerebene (10) beinhaltet,
**dadurch gekennzeichnet,**
**dass** wenigstens ein Lesegerät (30, 31) durch Verschieben und/oder Verschwenken aus einer ersten Lage in eine zweite Lage bewegt wird, wobei in der ersten Lage bei Belegung aller Positionen der zugeordneten Lagerebene (10) mit Gütern kein RFID-Transponder gleichzeitig von zwei benachbarten Lesegeräten (30, 31) erfassbar ist, während in der zweiten Lage bei Belegung aller Positionen dieser Lagerebene (10) mit Gütern wenigstens ein RFID-Transponder gleichzeitig von zwei benachbarten Lesegeräten (30, 31) erfassbar ist, und dass die Auswertung der RFID-Signale durch die Datenverarbeitungseinheit in der zweiten Lage der Lesegeräte (30, 31) beinhaltet, dass ein Gut mit einem RFID-Transponder, der gleichzeitig von zwei Lesegeräten (30, 31) erfassbar ist, einer Position auf der Lagerebene (10) zugeordnet wird, deren zugeordneter Lokalisationstransponder zu einem ersten Zeitpunkt vor der Erfassung dieses RFID-Transponders erfasst wurde und zu einem darauffolgenden Zeitpunkt nach der Erfassung dieses RFID-Transponders nicht mehr durch ein Lesegerät (30, 31) erfasst wurde.

9. Verfahren nach Anspruch 8,
**dadurch gekennzeichnet,**
**dass** die Datenverarbeitungseinheit bei der Auswertung von RFID-Signalen der Lesegeräte (30, 31) unterscheidet zwischen RFID-Transpondern, die von nur einem Lesegerät (30, 31) erfassbar sind und RFID-Transpondern, die gleichzeitig von zwei Lesegeräten (30, 31) erfassbar sind, und dass ein RFID-Transponder, der von nur einem Lesegerät (30, 31) erfasst wird, einer Position auf der Lagerebene (10) im Bereich dieses Lesegerätes (30, 31) zugeordnet wird, die außerhalb des Erfassungsgebietes des anderen Lesegerätes (30, 31) der jeweiligen Lagerebene (10) liegt, während ein RFID-Transponder, der gleichzeitig von zwei benachbarten Lesegeräten (30, 31) erfasst wird, einer Position zugeordnet wird, die im Schnittbereich der Erfassungsgebiete dieser zwei benachbarten Lesegeräten (30, 31) liegt.

10. Verfahren nach einem der Ansprüche 8 bis 9,
**dadurch gekennzeichnet,**
**dass** die Lesegeräte (30, 31) in einem ersten Überwachungszeitraum in der ersten Lage angeordnet werden, wobei Güter einer Lagerebene (10) an einer bestimmten Anzahl von definierten Positionen auf dieser Lagerebene (10) platzierbar sind, während die Lesegeräte (30, 31) in einem zweiten Überwachungszeitraum in der zweiten Lage angeordnet werden, und in dem zweiten Überwachungszeitraum Güter an einer anderen Anzahl an definierten Positionen auf der gleichen Lagerebene (10) platzierbar sind als im ersten Überwachungszeitraum.

11. Verfahren nach Anspruch 10,
**dadurch gekennzeichnet,**
**dass** die Anzahl der Positionen auf einer Lagerebene (10) in Abhängigkeit von der Größe der Güter gewählt wird.

12. Verfahren nach einem der Ansprüche 10 und 11,
**dadurch gekennzeichnet,**
**dass** an allen definierten Positionen des Überwachungszeitraumes mit der höheren Anzahl von Positionen Lokalisationstransponder angebracht sind und dass die Lokalisationstransponder zwischen den beiden Überwachungszeiträumen entlang der Reihe an definierten Positionen auf einer Lagerebene (10) so verschoben werden, dass jeder Position jeweils mindestens ein Lokalisationstransponder zugeordnet ist und dass der jeweilige Lokalisationstransponder bei Positionierung eines Gutes auf einer Position aufgrund der Abschirmwirkung des betreffenden Gutes durch kein Lesegerät (30, 31) erfassbar ist.

13. Verfahren nach einem der Ansprüche 10 und 11,
**dadurch gekennzeichnet,**
**dass** an allen definierten Positionen des ersten und des zweiten Überwachungszeitraumes Lokalisationstransponder angebracht sind und in der Datenverarbeitungseinheit hinterlegt ist, welche Lokalisationstransponder für welchen Überwachungszeitraum gültig sind, und dass bei Auswertung der RFID-Signale durch die Datenverarbeitungseinheit nur die für den jeweiligen Überwachungszeitraum gültigen Lokalisationstransponder berücksichtigt werden.
